Europäisches Patentamt

European Patent Office

Office européen des brevets

(19)

(11) **EP 0 915 963 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(51) Int Cl.⁷: **C12H 1/06**, B01D 65/06

(21) Anmeldenummer: **98913426.7**

(86) Internationale Anmeldenummer:
**PCT/AT98/00092**

(22) Anmeldetag: **08.04.1998**

(87) Internationale Veröffentlichungsnummer:
**WO 98/045404 (15.10.1998 Gazette 1998/41)**

(54) **VERFAHREN ZUR HERSTELLUNG VON KALTFILTRIERTEM BIER**

METHOD FOR PRODUCING COLD-FILTERED BEER

PROCEDE DE PRODUCTION DE BIERE FILTREE A FROID

(84) Benannte Vertragsstaaten:
**AT BE CH DE DK ES FI FR GB GR IE IT LI LU MC NL PT SE**
Benannte Erstreckungsstaaten:
**RO**

(30) Priorität: **08.04.1997 AT 59597**

(43) Veröffentlichungstag der Anmeldung:
**19.05.1999 Patentblatt 1999/20**

(73) Patentinhaber: **Brau-Union Osterreich Aktiengesellschaft**
**8020 Graz (AT)**

(72) Erfinder:
• **PELZ, Dieter**
**A-8044 Graz (AT)**
• **MOSER, Gilbert**
**A-8055 Graz (AT)**
• **ZANKER, Gerald**
**A-8075 Hart bei Graz (AT)**

(74) Vertreter: **Schwarz, Albin, Dr. et al**
**Kopecky & Schwarz**
**Patentanwälte**
**Wipplingerstrasse 32/22**
**1010 Wien (AT)**

(56) Entgegenhaltungen:
**EP-A- 0 137 698        FR-A- 2 660 211**

• **PATENT ABSTRACTS OF JAPAN vol. 095, no. 006, 31. Juli 1995 & JP 07 080262 A (TORAY IND INC), 28. März 1995**
• **PATENT ABSTRACTS OF JAPAN vol. 017, no. 452 (C-1099), 19. August 1993 & JP 05 103957 A (MITSUI ENG & SHIPBUILD CO LTD), 27. April 1993**

Beschreibung

**Beschreibung**

Die vorliegende Erfindung betrifft ein Verfahren zur Herstellung von kaltfiltriertem Bier, wobei Bier durch ein Membranfilter filtriert wird, welches nach Filtration gereinigt und zur neuerlichen Filtration eingesetzt wird.

Bier muß aufgrund der langen Vertriebswege entkeimt werden, um es lagerfähig zu machen. Heutzutage wird das Bier zur Entkeimung in erster Linie pasteurisiert. Dazu wird das Bier, z.B. in Flaschen oder Dosen abgefüllt, auf eine Temperatur zwischen 62 und 68°C erhitzt, wodurch die Keime abgetötet werden.

Dieses Pasteurisieren ist jedoch energieaufwendig. Ferner hat es den Nachteil, daß die zugeführte Energie chemische Reaktionen auslösen kann, die das Produkt beeinträchtigen und nur schwer beherrschbar sind. Durch diese Reaktionen kann z.B. der Geschmack des Produktes nachteilig verändert werden ("Pasteur-Geschmack"), und es besteht darüberhinaus die Gefahr, daß sich unerwünschte Substanzen bilden. Das Pasteurisieren ist somit ein relativ teures, energieaufwendiges und daher umweltbelastendes, und unter Umständen qualitätsminderndes Entkeimungsverfahren.

Als weiteres Entkeimungsverfahren ist die Kaltfiltration bekannt. Kaltfiltrierte Biere werden z.B. in USA, Japan und Korea als sogenannte "Draft-Biere" angeboten. In Europa sind diese Biere verboten, da sie technische Enzyme enthalten. Mit diesen technischen Enzymen wird einem Nachteil der Kaltfiltration entgegengesteuert, der dieser Technik anhaftet: die rasche Verblockung des Filters. Diese Verblockung ist auf Ablagerungen der aus dem Bier zu filtrierenden Stoffe auf der stromaufwärtigen Seite des Membranfilters zurückzuführen. Die Ablagerungen lassen sich nur schwer oder überhaupt nicht mehr vom Filter entfernen und reduzieren die Standzeiten des Filters. Dies verteuert die Bierproduktion, da Membranfilter teuer sind.

Um die Standzeiten des Filters zu erhöhen, empfehlen die Hersteller von Membranfiltern, die gebrauchten Membranen durch Behandeln mit Proteasen, Glucanasen und Xylanasen, sowie mit Chemikalien, wie Tensiden, Säuren/Basen und mit Oxidationsmitteln, zu reinigen und damit wieder einsatzfähig zu machen. Diese Reinigung kann beispielsweise in zwei Stufen ablaufen, wobei in einer ersten Stufe mit den genannten Enzymen und danach gegebenenfalls zusätzlich mit genannten Chemikalien gereinigt wird.

Eine beispielhafte Reinigungsprozedur sieht beispielsweise bei einer Filterfläche von 320 m$^2$ nach einer Filtrationsmenge von jeweils 5000 Hektoliter (hl) eine enzymatische Reinigung und nach jeweils 20000 hl zusätzlich eine chemische Reinigung vor. Die typische Standzeit von derart gereinigten Filtern mit der genannten Filterfläche ist etwa 100000 Hektoliter (hl).

Die vorbekannten Reinigungsprozeduren haben jedoch den Nachteil, daß sie die Ablagerungen auf dem Filter nur ungenügend ablösen können, wodurch die Reinigungswirkung mit zunehmendem Alter des Membranfilters stark abnimmt.

Die Erfindung stellt sich daher die Aufgabe, ein Verfahren zur Herstellung von Bier der eingangs erwähnten Art bereitzustellen, bei dem die oben beschriebenen Probleme nicht auftreten und die Standzeiten der Membranfilter erhöht sind.

Die Aufgabe wird bei einem Verfahren zur Herstellung von kaltfiltriertem Bier, wobei Bier durch ein Membranfilter filtriert wird, welches Membranfilter nach Filtration gereinigt und zur neuerlichen Filtration eingesetzt wird, erfindungsgemäß dadurch gelöst, daß das Membranfilter zur Reinigung mit einem aprotisch polaren Lösungsmittel in Kontakt gebracht wird.

Es hat sich überraschenderweise gezeigt, daß Membranfilter mit einem aprotisch polaren Lösungsmittel besser gereinigt werden können, als dies mit herkömmlichen Reinigungsmitteln, wie z.B. Proteasen, Xylanasen und Glucanasen bzw. Tensiden und anderen Stoffen, gelingt. Mit der erfindungsgemäßen Reinigung läßt sich eine beträchtliche Erhöhung der Standzeiten von Membranfiltern bei der Bierfiltration erzielen.

Im erfindungsgemäßen Verfahren werden als aprotisch polare Lösungsmittel Dimethylsulfoxid, Dimethylformamid oder Tetrahydrofuran bevorzugt eingesetzt.

Dimethylsulfoxid wird bevorzugt in Gegenwart eines Alkalimetallhydroxids eingesetzt.

Eine bevorzugte Ausgestaltung des erfindungsgemäßen Verfahrens ist dadurch gekennzeichnet, daß das Lösungsmittel als Gemisch mit Wasser vorliegt, und zwar am besten zwischen 30 und 100 Masse-%, bezogen auf die Gesamtmasse des Gemisches.

Die Reinigung wird zweckmäßigerweise bis zu einem Zeitpunkt durchgeführt, an dem sich das Strömungspotential bzw. das Zetapotential des Membranfilters bei Betrieb nicht mehr ändert. Es hat sich gezeigt, daß das Strömungspotential, welches sich am Membranfilter einstellt, bzw. das daraus errechenbare Zetapotential (siehe unten) ein guter Indikator dafür ist, in welchem Ausmaß die das Membranfilter verblockenden Substanzen bereits abgelöst wurden.

Im folgenden wird die Erfindung noch näher erläutert. Als Membranfilter wurde ein Filter der Type NB aus Nylon 66 (Hersteller: Fa. Pall Filtrationstechnik GmbH, Deutschland) eingesetzt. Ein derartiges Filter wird im Stand der Technik zur Kaltfiltration von Bier häufig eingesetzt.

Um das Filtrationsverhalten eines Filters zu bestimmen, wurde der sogenannte Membranfiltertest nach Esser angewandt (Monatszeitschrift für Brauerei, 25. Jahrgang, Nr. 6, Seiten 145-151, 1972). Dieser Test ist bei der Überprüfung von Maßnahmen zur Verbesserung der Filtrierbarkeit aussagekräftig.

Um das Filtrationsverhalten eines neuen, d.h. ungebrauchten, Membranfilters zu bestimmen, wurde ein Druck-Filtrationsgerät (Typ SM 16526, 200 ml Füllinhalt; Hersteller: Fa. Sartorius GmbH, Göttingen, DE) für ein Membranfilter aus Polyamid Nylon 66 (47 mm; Porenweite 0,2 μm) verwendet.

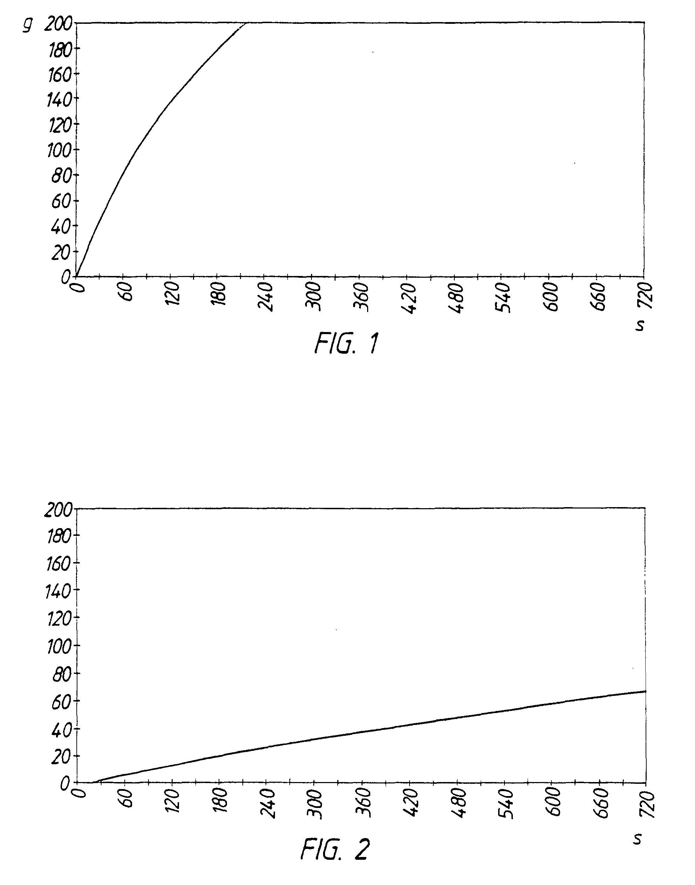

Auf 0°C abgekühltes Bier wurde unter isobaren Bedingungen (1 bar) durch das Filter gepreßt, wobei alle 10 Sekunden die Filtratmenge gewogen wurde. Nachdem 200 g Filtrat erhalten worden waren, wurde der Versuch abgebrochen. Das Ergebnis ist in der Figur 1 als Diagramm graphisch dargestellt.

Figur 1 zeigt, daß unter den oben angegebenen Bedingungen mit dem ungebrauchten Filter nach etwa 210 Sekunden die 200 g Filtrat erhalten werden konnten.

Unter den gleichen Bedingungen wurde das Filtrationsverhalten eines verblockten, d.h. gebrauchten, Filters untersucht. Das Ergebnis ist in der Figur 2 dargestellt, welche zeigt, daß selbst in 720 Sekunden nur etwa 60 g Filtrat gewonnen werden konnten.

Das verblockte Filter wurde gemäß einem Verfahren des Standes der Technik gereinigt, wobei das Filter zuerst enzymatisch und dann chemisch gereinigt wurde, wie nachfolgend beschrieben ist.

Zur enzymatischen Reinigung wurde das verblockte Filter 1 Stunde mit einer 1%igen wässerigen Lösung eines Gemisches von β-Glucanasen und Xylanasen (P3-Ultrasil 65; Hersteller: Henkel) mit einem pH von 5 (eingestellt mittels einer 0,05%igen wässerigen Lösung eines Gemisches von Tensiden und einer sauren Komponente (P3-Ultrasil 75; Hersteller: Henkel) bei einer Temperatur von 50°C behandelt. Anschließend wurde diese Behandlung ein weiteres Mal vorgenommen.

Dann wurde das Filter mit einer 0,5%igen wässerigen Lösung eines Gemisches von Tensiden, Glucanasen und Proteasen (P3-Ultrasil 62; Hersteller: Henkel) mit einem pH von 9-9,5 (eingestellt mittels einer 0,15%igen wässerigen Lösung eines Gemisches von Tensiden und einer alkalischen Komponente (P3-Ultrasil 91; Hersteller: Henkel) bei einer Temperatur von 50°C 3 Stunden lang behandelt und danach mit warmem Wasser (50°C) gespült.

Zur chemischen Reinigung wurde das Filter mit einer 1%igen wässerigen Lösung eines Gemisches von Tensiden und einer sauren Komponente (P3-Ultrasil 75; Hersteller: Henkel) bei 60°C 30 Minuten lang behandelt und dann mit frischem Wasser gespült. Anschließend wurde das Filter mit einer wässerigen Lösung enthaltend 1% eines Gemisches von Tensiden und einer alkalischen Komponente (P3-Ultrasil 91; Hersteller: Henkel) und 1% eines Gemisches von Tensiden und einem Sauerstoffspender (P3-Ultrasil 05; Hersteller: Henkel) bei einer Temperatur von 60°C 30 Minuten lang behandelt und danach mit frischem Wasser gespült. Dann wurde das Filter ein weiteres Mal mit einer 0,5% igen wässerigen Lösung eines Gemisches von Tensiden und einer sauren Komponente (P3-Ultrasil 75; Hersteller: Henkel) 30 Minuten lang behandelt und dann so lange mit frischem Wasser gespült, bis das Spülwasser die elektrische Leitfähigkeit von frischem Wasser erreicht hat.

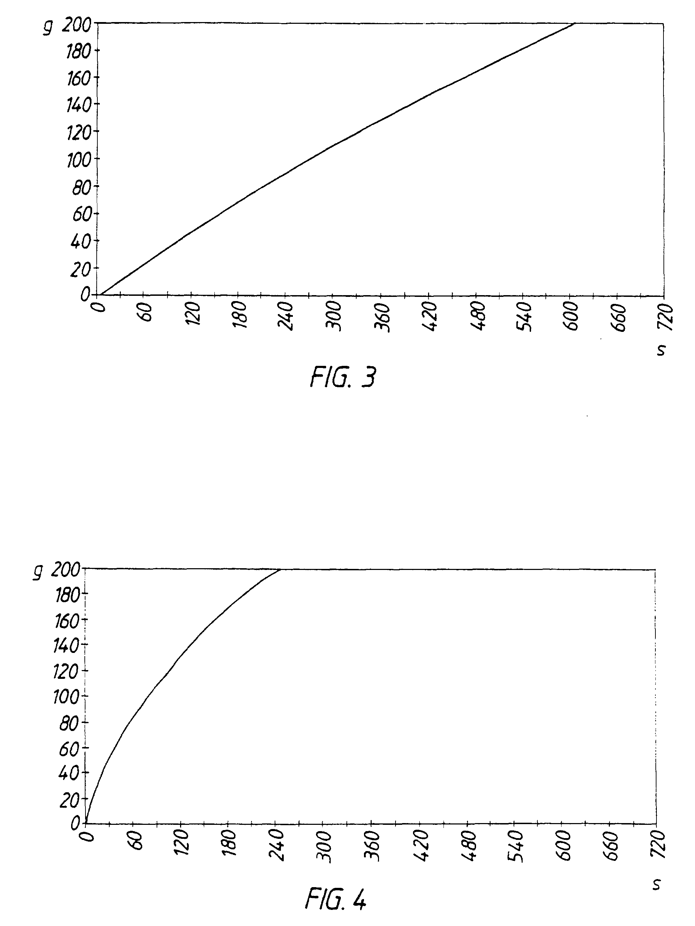

Danach wurde das Filtrationsverhalten dieses gereinigten Filters unter den oben angegebenen Bedingungen erneut untersucht. Das Ergebnis ist in der Figur 3 dargestellt.

Figur 3 zeigt, daß sich das Filtrationsverhalten etwas verbessert hat, da bereits nach etwa 600 Sekunden die 200 g Filtrat erhalten werden konnten.

Das gleiche verblockte Filter, dessen Filtrationsverhalten in der Figur 2 dargestellt ist, wurde gemäß einer Ausführungsform des erfindungsgemäßen Verfahrens gereinigt, wobei das Filter mit einem Dimethylsulfoxid-(DMSO)-Wasser-Gemisch (50% DMSO, 49% Wasser, 1% KOH) mit einer Temperatur von 55°C 20 Minuten lang behandelt wurde. Anschließend wurde das Filter mit heißem Wasser (60°C) sowohl in Filtrierrichtung als auch gegen die Filtrierrichtung gespült. Dann wurde das Filter solange gewaschen, bis das Spülwasser DMSO-frei war. Die DMSO-Freiheit wurde chromatographisch überprüft.

Mit diesem erfindungsgemäß gereinigten Filter wurde das Filtrationsverhalten gemäß obigem Verfahren erneut getestet. Das Ergebnis ist in der Figur 4 dargestellt.

Figur 4 zeigt, daß bereits nach etwa 250 Sekunden 200 g Filtrat erhalten werden konnten. Ähnlich gute Ergebnisse konnten auch mit anderen aprotischen polaren Lösungsmitteln erzielt werden. Dies bedeutet eine wesentliche Verbesserung gegenüber dem Stand der Technik (Figur 3). Das erfindungsgemäße Verfahren gestattet somit eine wesentlich bessere Reinigung eines gebrauchten Membranfilters, als dies mit Reinigungsverfahren nach dem Stand der Technik möglich ist. Mit dem erfindungsgemäßen Reinigungsverfahren kann somit die Standzeit eines Membranfilters erhöht werden.

Bestimmung des Reinigungserfolges

Das Zetapotential von Membranfiltern wurde mit dem elektrokinetischen Meßsystem EKA der Anton Paar GmbH, Österreich, bestimmt. Diese Messung beruht auf der Methode des Strömungspotentials. Die Filter werden von einem Elektrolyt durchströmt, und das Potential (Strömungspotential), das durch Abscheren von Gegenionen erzeugt wird, wird mit Elektroden erfaßt, und mit dieser Meßgröße wird das Zetapotential errechnet (siehe unten).

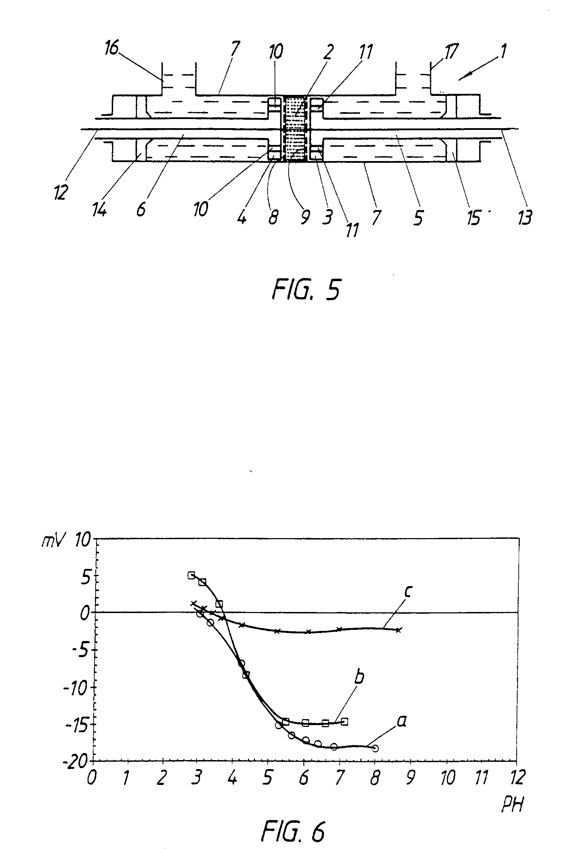

Die Meßzelle, mit welcher das Strömungspotential bzw. das Zetapotential bestimmt wurde, ist in der Figur 5 schematisch dargestellt.

Die Bezugsziffer 1 bezeichnet die Meßzelle, in der das Membranfilter 2 in einer Filterhalterung 3, 4 aus Teflon verwerfungsfrei eingespannt ist. Die Filterhalterung 3, 4 sind die Endstücke zweier Kolben 5 bzw. 6, die im zylindrischen Teil 7 der Meßzelle 1 verschiebbar gelagert sind.

Die Endstücke 3, 4 der Kolben 5 bzw. 6 besitzen feine Bohrungen 10 und 11 für die zu filtrierende Flüssigkeit und drücken die perforierten Elektroden 8 und 9 gegen das Membranfilter 2. Die Elektroden 8 und 9 stehen mit den beiden elektrischen Anschlüssen 12 und 13, die im Inneren der Kolben 5 und 6 verlaufen, in Verbindung, sodaß das beim Durchströmen der Membran 2 aufgebaute Strömungspotential gemessen werden kann. Die Elektroden sind bevorzugt Silber- bzw. Silberchloridelektroden, die bei Stromdurchtritt eine geringe Polarisierung aufweisen. Die Kolben 6 und 7 sind in den Dichtungen 14 bzw. 15 so gelagert, daß sie einerseits verschiebbar sind und andererseits keine Flüssigkeit aus der Meßzelle austreten kann.

Die zu filtrierende Flüssigkeit gelangt über die Zuleitung 16 in den zylindrischen Teil 7 der Meßzelle 1, strömt durch die feinen Bohrungen 10 des Kolbens 6, durch die Elektrode 8, wobei ein elektrisches Potential aufgebaut wird, und durch das Membranfilter 2. Die filtrierte Flüssigkeit strömt durch die Elektrode 9, wobei ebenfalls ein Potential aufgebaut wird, passiert die feinen Bohrungen 11 des Kolbens und verläßt die Meßzelle durch die Ableitung 17.

Zur Bestimmung des Zetapotentials aus dem gemessenen Strömungspotential bzw. Strömungsstrom ist zusätzlich noch (nicht dargestellt) die Messung der Druckdifferenz in der Meßzelle zwischen Zuleitung 16 und Ableitung 17, der Leitfähigkeit der zu filtrierenden Flüssigkeit und ihrer Viskosität erforderlich. Aus diesen Meßgrößen errechnet sich das Zetapotential bekanntermaßen wie folgt:

$$\text{Zetapotential} = \frac{U}{\Delta p} \cdot \frac{LF \cdot \eta}{\varepsilon \cdot \varepsilon_0}$$

wobei U das Strömungspotential ist, $\Delta p$ die Druckdifferenz bedeutet, LF die Leitfähigkeit ist, $\eta$ die Viskosität und $\varepsilon\varepsilon_0$ die Dielektrizitätskonstante ist.

Die Veränderung des Zetapotentials des Membranfilters mit zunehmender Verblockung ist in der Figur 6 dargestellt. Diese Figur ist ein Diagramm, in welchem als Ordinate das Zetapotential in Millivolt und als Abszisse der pH-Wert, bei welchem das Zetapotential bestimmt wurde, aufgetragen ist. Der pH-Wert der Elektrolytlösung (0,001 n wässerige KCl-Lösung) wurde mittels 0,1 n HCl bzw. mit 0,1 n NaOH eingestellt. Die vorgegebene Druckdifferenz betrug 350 mbar.

Das Diagramm wurde erhalten, indem zunächst von einem neuen, d.h. ungebrauchten, Membranfilter aus Polyamid (Type NB, Hersteller: Pall Filtrationstechnik GmbH, D-6072 Dreieich 1, Deutschland) bei verschiedenen pH-Werten mit der oben beschriebenen Meßzelle die Zetapotentiale bestimmt wurden.

Die Ergebnisse sind für das ungebrauchte Membranfilter als Kurve "a" eingetragen. Es ist ersichtlich, daß das ungebrauchte Filter bei alkalischem pH ein Zetapotential von etwa -18 mV aufweist, und daß das Zetapotential mit kleiner werdendem pH ansteigt und bei einem pH von etwa 3 schließlich den Wert Null erreicht.

Die Kurve "b" zeigt die Abhängigkeit des Zetapotentials vom pH-Wert des obigen Filters bei gleichen Meßbedingungen, wie sie oben angegeben sind, jedoch nachdem es bereits zur Filtration von Bier eingesetzt wurde und aus diesem Grund zum Teil verblockt ist. Wie ersichtlich, wird das Zetapotential durch die teilweise Verblockung etwas angehoben und erreicht bei pH-Werten von etwa 7 nur mehr einen Wert von etwa -15 mV.

Die Kurve "c" wurde für das gleiche Membranfilter aufgenommen, nachdem es vollkommen verblockt war. Es ist ersichtlich, daß sich das Zetapotential mit dem pH-Wert nur noch wenig ändert und selbst im alkalischen Bereich nicht kleiner als etwa -2 mV wird.

Zur Überprüfung der erfindungsgemäßen Reinigung wird das Zetapotential des zu reinigenden Filters bestimmt, wobei die Reinigung dann gut gelungen ist, wenn das Zetapotential der gereinigten Membran möglichst weit in Richtung des Zetapotentials der ungebrauchten Membran verschoben wurde.

Es ist dem Fachmann klar, daß sich im erfindungsgemäßen Verfahren insbesondere Membranfilter gut eignen, deren Zetapotential sich in Abhängigkeit vom Verblockungszustand genügend stark ändert. Dies festzustellen ist jedoch für den Fachmann durch einfaches Ausprobieren leicht möglich.

**Patentansprüche**

1. Verfahren zur Herstellung von kaltfiltriertem Bier, wobei Bier durch ein Membranfilter filtriert wird, welches Membranfilter nach Filtration gereinigt und zur neuerlichen Filtration eingesetzt wird,
**dadurch gekennzeichnet, daß**
das Membranfilter zur Reinigung mit einem aprotisch polaren Lösungsmittel in Kontakt gebracht und danach gewaschen wird.

2. Verfahren nach Anspruch 1, **dadurch gekennzeichnet, daß** zur Reinigung Dimethylsulfoxid, Dimethylformamid oder Tetrahydrofuran eingesetzt wird.

3. Verfahren nach Anspruch 2, **dadurch gekennzeichnet, daß** die Reinigung bei Einsatz von Dimethylsulfoxid in Gegenwart eines Alkalimetallhydroxids durchgeführt wird.

4. Verfahren nach einem der Ansprüche 1 bis 3, **dadurch gekennzeichnet, daß** das Lösungsmittel als Gemisch mit Wasser vorliegt.

5. Verfahren nach Anspruch 4, **dadurch gekennzeichnet, daß** das Lösungsmittel zwischen 30 und 100 Masse-%, bezogen auf die Gesamtmasse des Gemisches, vorliegt.

6. Verfahren nach einem der Ansprüche 1 bis 5, **dadurch gekennzeichnet, daß** die Reinigung bis zu einem Zeitpunkt durchgeführt wird, an dem sich das Zetapotential des Membranfilters nicht mehr ändert.

## Claims

1. A method for producing cold-filtered beer, wherein beer is filtered through a membrane filter which is cleaned after filtration and used for a new filtration, **characterized in that** the membrane filter for the purpose of cleaning is contacted with an aprotically polar solvent and washed afterwards.

2. A method according to claim 1, **characterized in that** dimethyl sulfoxide, dimethylformamide or tetrahydrofuran is used for cleaning.

3. A method according to claim 2, **characterized in that** cleaning is carried out in the presence of an alkali metal hydroxide if dimethyl sulfoxide is used.

4. A method according to any one of claims 1 to 3, **characterized in that** the solvent is present as a mixture with water.

5. A method according to claim 4, **characterized in that** the solvent is present between 30 and 100 mass %, based on the total mass of the mixture.

6. A method according to any one of claims 1 to 5, **characterized in that** cleaning is carried out until the zeta potential of the membrane filter no longer changes.

## Revendications

1. Procédé de production de bière filtrée à froid, la bière étant filtrée par un filtre à membrane, lequel filtre à membrane est nettoyé après filtrage et est utilisé pour un nouveau filtrage, **caractérisé en ce que** le filtre à membrane est mis en contact avec un solvant aprotique polaire pour le nettoyage et est ensuite lavé.

2. Procédé selon la revendication 1, **caractérisé en ce que** l'on utilise du diméthylsulfoxyde, du diméthylformamide ou du tétrahydrofuranne pour le nettoyage.

3. Procédé selon la revendication 2, **caractérisé en ce que** le nettoyage est réalisé en utilisant du diméthylsulfoxyde en présence d'un hydroxyde de métaux alcalins.

4. Procédé selon l'une quelconque des revendications 1 à 3, **caractérisé en ce que** le solvant existe en mélange avec de l'eau.

5. Procédé selon la revendication 4, **caractérisé en ce que** le solvant est d'une masse comprise entre 30 et 100 en pourcentage de poids par rapport à la masse totale du mélange.

6. Procédé selon l'une quelconque des revendications 1 à 5, **caractérisé en ce que** le nettoyage est réalisé jusqu'à un moment auquel le potentiel zêta du filtre à membrane ne se modifie plus.

FIG. 1

FIG. 2

FIG. 3

FIG. 4

7

FIG. 5

FIG. 6